# EUROPÄISCHE PATENTSCHRIFT

(11) **EP 3 524 639 B1**
(45) Veröffentlichungstag und Bekanntmachung des Hinweises auf die Patenterteilung: **07.10.2020**
(21) Anmeldenummer: 18155547.5
(22) Anmeldetag: 07.02.2018
(51) Int. Cl.: C08L 7/00, C08L 9/00, B60C 1/00, B60C 11/00

(54) **FAHRZEUGREIFEN**
VEHICLE TYRES
PNEUS DE VÉHICULE

(43) Veröffentlichungstag der Anmeldung: 14.08.2019
(73) Patentinhaber: Continental Reifen Deutschland GmbH, 30165 Hannover (DE)
(72) Erfinder: Weber, Christian, 30826 Garbsen (DE); Kendziorra, Norbert, 30827 Garbsen (DE)
(74) Vertreter: Finger, Karsten

(56) Entgegenhaltungen:
- EP-A1- 0 738 613
- EP-A1- 1 988 120
- EP-A1- 2 174 804
- EP-A1- 2 371 580
- EP-A1- 3 012 118
- WO-A1-2007/042118

## Beschreibung

Die Erfindung betrifft einen Fahrzeugreifen.

Es ist bekannt, dass Fahrzeugreifen, insbesondere Fahrzeugluftreifen, zweigeteilte Laufstreifen aufweisen können. Von besonderer Relevanz für bestehende Zielkonflikte aus Abriebeigenschaften und Rollwiderstandsverhalten ist der sogenannte Cap-Base-Aufbau des Laufstreifens. Hierbei ist die Cap der Teil des Laufstreifens, der radial außen angeordnet ist und bei Verwendung des Reifens in Kontakt mit der Fahrbahn kommt. Die Kautschukmischung der Cap ist hinsichtlich der Anforderungen durch den Kontakt mit der Fahrbahn optimiert, wie hinsichtlich des Abriebs und der Schnitt- und/oder Reißeigenschaften. Die Base ist die radial innere Schicht des Laufstreifens, die normalerweise nicht mit der Fahrbahn in Berührung kommt und deren Kautschukmischung zu diesem Zweck hinsichtlich einem möglichst geringen Wärmeaufbau innerhalb des Reifens und einem optimierten Rollwiderstand ausgelegt ist. Die Kautschukmischungen der Cap und der Base unterscheiden sich somit voneinander, und zwar insbesondere im Füllstoffgehalt.
Allerdings kann es bei starkem Abrieb, insbesondere bei zu spät bemerktem ungleichmäßigem Abrieb, der Laufstreifencap insbesondere im Schulterbereich des Reifens z. B. aufgrund häufiger Kurvenfahrten dazu führen, dass die Base in Erscheinung tritt. Hierdurch treten Schwierigkeiten im Fahrverhalten und ein erhöhtes Gefährdungspotential auf, da die Base wie geschildert üblicherweise in erster Linie nicht für den Kontakt mit der Fahrbahn ausgelegt ist.
Wenn sowohl Cap als auch Base wie bei Fahrzeugreifen üblich rußhaltige und damit schwarze Kautschukmischungen umfassen, können dieser ungleichmäßige Abrieb und die nach radial außen in Erscheinung tretende Base möglicherweise erst viel zu spät bemerkt werden, wodurch Fahrverhalten und Sicherheit weiter beeinträchtigt werden.

Der vorliegenden Erfindung liegt daher die Aufgabe zugrunde, einen Fahrzeugluftreifen umfassend einen Laufstreifen, wobei der Laufstreifen eine Laufstreifencap und eine Laufstreifenbase umfasst, bereitzustellen, bei dem frühzeitig erkannt werden kann, wenn die Cap derart stark abgefahren ist, dass hierdurch die Base in Kontakt mit der Fahrbahn kommt.

Gelöst wird diese Aufgabe durch den erfindungsgemäßen Fahrzeugreifen umfassend einen Laufstreifen, wobei der Laufstreifen eine Laufstreifencap und eine Laufstreifenbase umfasst, wobei die Laufstreifencap die Laufstreifenbase vollständig nach radial außen bedeckt, wobei die Laufstreifencap wenigstens eine erste Kautschukmischung A umfasst, welche ein Füllstoffsystem umfassend wenigstens einen Ruß und mehr als 80 Gew.-%, bevorzugt mehr als 90 Gew.-%, wenigstens einer Kieselsäure bezogen auf die Gesamtmenge an Füllstoffen enthält; und wobei die Laufstreifenbase wenigstens eine zweite Kautschukmischung B umfasst, welche frei von Ruß ist und welche nicht schwarz ist und welche mindestens 50 phr Naturkautschuk (NR) enthält.

Dadurch dass die Cap die Base zunächst (d. h. im Neureifen) vollständig nach radial außen bedeckt und die Base aus einer nicht-schwarzen rußfreien Kautschukmischung B ausgeführt ist, ist die Base sofort radial außen sichtbar, sobald die Cap zu stark abgefahren ist. Wie eingangs geschildert, ist dies insbesondere für einen möglichen ungleichmäßigen Abrieb im Schulterbereich von Bedeutung. Mit dem erfindungsgemäßen Fahrzeugreifen ergeben sich somit ein verbessertes Fahrverhalten und eine erhöhte Sicherheit auch trotz ungleichmäßigem Abrieb. Dabei besteht ein weiterer Vorteil der Erfindung darin, dass der optische Unterschied zwischen Cap- und Basemischungen, also zwischen der Kautschukmischung A und der Kautschukmischung B, ohne einen zusätzlichen Verfahrensschritt und ohne zusätzliche Materialien bereitgestellt wird. Insbesondere muss keine separate Substanz dosiert werden und zusätzlich fällt die Dosierung von Ruß weg, wobei hier insbesondere von Basemischungen mit Kieselsäure als Hauptfüllstoff und einer geringen Rußmenge von 2 bis 4 phr ausgegangen wird.

Unter "frei von Ruß" wird dabei verstanden, dass die Kautschukmischung B insgesamt 0 phr eines oder mehrerer Ruße enthält. Die Kautschukmischung ist hierdurch nicht schwarz. Somit ist die Kautschukmischung auch frei von sonstigen Schwarzpigmenten oder schwarzfärbenden Substanzen.
Die Kautschukmischung A enthält dagegen wenigstens einen Ruß und ist damit schwarz.

Bei dem Fahrzeugreifen kann es sich prinzipiell um jede Art von Fahrzeugreifen handeln, deren Laufstreifen einen Cap-Base-Aufbau aufweisen kann.
Gemäß einer bevorzugten Ausführungsform der Erfindung handelt es sich um einen profilierten Fahrzeugreifen mit radial erhabenen Profilelementen, wie insbesondere Profilrippen und/oder Profilblockelementen, die durch Profilrillen begrenzt sind. Auch hierbei kann das beschriebene Phänomen insbesondere bei Profilblockreihen oder Profilrippen im Schulterbereich auftreten, aber auch in anderen Bereichen der nach radial außen erhabenen Elemente.

Gemäß einer bevorzugten Ausführungsform der Erfindung handelt es sich bei dem erfindungsgemäßen Fahrzeugreifen um einen Fahrzeugluftreifen.

Gemäß einer bevorzugten Ausführungsform der Erfindung handelt es sich um einen Fahrzeugreifen für Personenkraftwagen handelt. Insbesondere bei einem PKW-Reifen könnte durch die vergleichsweise (vgl. zum LKW-Reifen) in radialer Richtung dünn ausgelegte Cap ein ungleichmäßiger Abrieb dazu führen, dass die Base nach radial außen in Erscheinung tritt. Der Vorteil der Erfindung zeigt sich somit insbesondere bei PKW-Reifen.

Im Folgenden werden die Bestandteile der Kautschukmischung A und B beschrieben. Dem Fachmann ist klar, dass die Bestandteile zunächst zu einer unvulkanisierten Kautschukmischung zusammengegeben werden und nach anschließender Formgebung der Laufstreifenteile die Vulkanisation des Reifenrohlings erfolgt. Dem Fachmann ist ebenfalls klar, dass hiernach zumindest manche Bestandteile, wie insbesondere der Kautschuk, chemisch und/oder physikalisch verändert vorliegen.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen Kautschuke bezogen, die der jeweiligen Kautschukmischung zugegeben werden.

### Bestandteile Kautschukmischung A (Cap)

Die Kautschukmischung A der Cap enthält ein Füllstoffsystem umfassend wenigstens einen Ruß und mehr als 80 Gew.-%, bevorzugt mehr als 90 Gew.-%, wenigstens einer Kieselsäure bezogen auf die Gesamtmenge an Füllstoffen.
Hierdurch ist die Kautschukmischung der Cap und damit letztlich auch der erfindungsgemäße Fahrzeugreifen bzgl. der Rollwiderstands-Performance optimiert und liegt auf einem vergleichsweise hohen Niveau im Zielkonflikt aus Rollwiderstand und Nassgriff-Performance.
Die Cap enthält wenigstens einen Ruß, insbesondere um die Cap optisch schwarz erscheinen zu lassen und farblich von der Base abzugrenzen.
Die Rußmenge beträgt dabei bevorzugt 1 bis 15 phr, bevorzugt 2 bis 10 phr. Bei Mengen von mehr als 15 phr Ruß werden die Cap und damit der erfindungsgemäße Reifen hinsichtlich des Zielkonfliktes aus Rollwiderstand und Nassgriffeigenschaften verschlechtert.
Ferner wird die Cap enthaltend wenigstens einen Ruß gegen Sonneneinstrahlung geschützt, da die Rußpartikel einfallendes Licht abfangen und die Sonnenstrahlung somit nicht in tiefere Bereiche der Mischung und somit des Reifens eindringen kann.

Gemäß der Erfindung weist der erfindungsgemäße Fahrzeugreifen wenigstens einen sogenannten Carbon Center Beam (kurz CCB) auf. Insbesondere bei der Verwendung von Kieselsäure-Cap-Mischungen mit sehr geringen Rußmengen wird die Leitfähigkeit über einen Carbon Center Beam gewährleistet.

Als Ruße sind im Rahmen der vorliegenden Erfindung prinzipiell alle dem Fachmann bekannten Ruß-Typen denkbar, wie insbesondere Industrieruße. Bevorzugt wird in der Kautschukmischung A ein Ruß eingesetzt, der eine Jodadsorptionszahl gemäß ASTM D 1510 von 20 bis 180 g/kg, besonders bevorzugt 30 bis 140 g/kg, und eine DBP-Zahl gemäß ASTM D 2414 von 30 bis 200 ml/100 g, bevorzugt 90 bis 180 ml/100g, besonders bevorzugt 110 bis 180 ml/100g, aufweist. Ein besonders geeigneter Ruß im Rahmen der vorliegenden Erfindung ist beispielsweise ein Ruß des ASTM-Typs N339 mit einer Jodadsorptionszahl von 90 g/kg und einer DBP-Zahl von 120 ml/100g.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 35 bis 260 m²/g, besonders bevorzugt von 70 bis 235 m²/g und ganz besonders bevorzugt von 70 bis 205 m²/g, und eine CTAB-Oberfläche (gemäß ASTM D 3765) von 30 bis 400 m²/g, bevorzugt von 30 bis 255 m²/g, besonders bevorzugt von 65 bis 230 m²/g und ganz besonders bevorzugt von 65 bis 200 m²/g, aufweist.
Derartige Kieselsäuren führen z. B. in Kautschukmischungen für innere Reifenbauteile zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch Kieselsäuren mit einer vergleichsweise niedrigen BET-Oberfläche (wie z. B. Zeosil® 1115 oder Zeosil® 1085 der Firma Solvay) als auch hoch dispergierbare Kieselsäuren, so genannte HD-Kieselsäuren (z. B. Zeosil® 1165 MP der Firma Solvay).

Besonders bevorzugt liegt die Kieselsäure in Form angebundener Kieselsäure in der Kautschukmischung A bzw. in dem Vulkanisat vor; hierzu enthält die Kautschukmischung A bevorzugt wenigstens ein Silan-Kupplungsagens.
Silan-Kupplungsagenzien werden im Rahmen der vorliegenden Erfindung auch als "Silan" bezeichnet.
Hierbei können ein oder mehrere verschiedene Silan-Kupplungsagenzien in Kombination miteinander eingesetzt werden. Die Kautschukmischung kann somit ein Gemisch verschiedener Silane enthalten.
Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH₂ oder -Sₓ- (mit x = 2 bis 8).

So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S® der Firma Evonik) zugesetzt werden.
Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 266® der Firma Evonik erhältlich, welches z.B. in der DE 102006004062 A1 beschrieben ist. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT (z.B. 3-(Octanoylthio)-1-Propyl-Triethoxysilan) in verschiedenen Varianten von der Firma Momentive, USA, oder solche, die unter dem Namen VP Si 363® von der Firma Evonik Industries vertrieben werden.

Weitere ggf. verstärkende Füllstoffe sind z.B. Graphit und Graphene und sogenannte "carbon-silica dual-phase filler".

Die Kautschukmischung A der Cap kann weitere nicht verstärkende Füllstoffe enthalten. Zu den weiteren nicht verstärkenden Füllstoffen zählen im Rahmen der vorliegenden Erfindung Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).

Zinkoxid gehört im Rahmen der vorliegenden Erfindung nicht zu den Füllstoffen.

Die Kautschukmischung A enthält ferner bevorzugt wenigstens einen Dienkautschuk.
Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.
Der Dienkautschuk ist dabei bevorzugt ausgewählt aus der Gruppe bestehend aus natürlichem Polyisopren und/oder synthetischem Polyisopren und/oder epoxidiertem Polyisopren und/oder Butadien-Kautschuk und/oder Butadien-Isopren-Kautschuk und/oder lösungspolymerisiertem Styrol-Butadien-Kautschuk und/oder emulsionspolymerisiertem Styrol-Butadien-Kautschuk und/oder Styrol-Isopren-Kautschuk und/oder Flüssigkautschuken mit einem Molekulargewicht M_{w} gemäß GPC von größer als 20000 g/mol und/oder Halobutyl-Kautschuk und/oder Polynorbornen und/oder hydriertem Styrol-Butadien-Kautschuk.

Besonders bevorzugt enthält die Kautschukmischung A wenigstens einen Dienkautschuk, der ausgewählt ist aus der Gruppe bestehend aus natürlichem Polyisopren und/oder synthetischem Polyisopren und/oder Butadien-Kautschuk und/oder lösungspolymerisiertem Styrol-Butadien-Kautschuk und/oder emulsionspolymerisiertem Styrol-Butadien-Kautschuk.

Bei dem natürlichen und/oder synthetischen Polyisopren sämtlicher Ausführungsformen kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.
Ferner ist auch ein Gemisch eines oder mehrerer natürlicher Polyisoprene mit einem oder mehreren synthetischen Polyisopren(en) denkbar.

Falls in der Kautschukmischung A Butadien-Kautschuk (= BR, Polybutadien) enthalten ist, kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.
Das oder die eingesetzte(n) Polybutadiene kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Für den Fall, dass wenigstens ein Styrol-Butadien-Kautschuk (Styrol-Butadien-Copolymer) in der Kautschukmischung enthalten ist, kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet.
Das eingesetzte Styrol-Butadien-Copolymer kann mit den oben beim Polybutadien genannten Modifizierungen und Funktionalisierungen endgruppenmodifiziert und/oder entlang der Polymerketten funktionalisiert sein.

Des Weiteren kann die Kautschukmischung A übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Ozonschutzwachse,
d) Harze, insbesondere Klebharze für innere Reifenbauteile, oder Weichmacherharze,
e) Mastikationshilfsmittel, wie z. B. 2,2'-Dibenzamidodiphenyldisulfid (DBD),
f) Prozesshilfsmittel, wie insbesondere Fettsäureester und Metallseifen, wie z.B. Zinkseifen und/oder Calciumseifen, und
g) Weichmacher, wie insbesondere Mineralölweichmacher, pflanzliche Öle wie Rapsöl, oder Flüssig-Polymere mit einem Molekulargewicht M_{w} gemäß GPC von kleiner oder gleich 20000 g/mol.

Der Mengenanteil der Gesamtmenge an weiteren Zusatzstoffen beträgt 3 bis 150 phr, bevorzugt 3 bis 100 phr und besonders bevorzugt 5 bis 80 phr.

Die Kautschukmischung A bzw. deren Vulkansiat basiert bevorzugt auf einer Schwefelvulkanisation. Hierzu enthält die unvulkanisierte Kautschukmischung A Schwefel und/oder Schwefelspender sowie von Vulkanisationsbeschleuniger, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).
Als Guanidin-Beschleuniger wird bevorzugt DPG (Diphenylguanidin) eingesetzt.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.

DipDis (Bis-(Diisopropyl)thiophosphoryldisulfid) und/oder Bis(O,O-2-ethylhexyl-thiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger.

### Bestandteile Kautschukmischung B (Base)

Die Kautschukmischung B enthält mindestens 50 phr Naturkautschuk (natürliches Polyisopren NR), wobei für die Art des Polyisoprens die obigen Ausführungen zur Kautschukmischung A gelten.
Hierdurch ergibt sich eine gute Rissbeständigkeit der Base-Mischung, wodurch vergleichsweise wenig Füllstoff eingesetzt werden kann (gering gefüllte Systeme) und sich somit eine niedrige Dämpfung und daraus resultierend gute Rollwiderstandseigenschaften der Base und damit auch des erfindungsgemäßen Fahrzeugreifens ergeben.
Zudem enthält die Kautschukmischung B gemäß einer bevorzugten Ausführungsform der Erfindung wenigstens einen weiteren Dienkautschuk, wobei die oben genannten Dienkautschuke auch hier als weiterer Dienkautschuk bevorzugt sind.

Gemäß einer besonders vorteilhaften Ausführungsform der Erfindung enthält die Kautschukmischung B 85 phr oder mehr wenigstens eines natürlichen Polyisoprens, wodurch sich eine besonders hohe Rissbeständigkeit mit den beschriebenen Vorteilen bzgl. der Füllstoffmenge ergibt.

Die Kautschukmischung B ist bevorzugt frei von einem Terpolymer aus Isobutylen, p-Methylstyrol und Brom-p-Methylstyrol, d. h. sie enthält 0 phr Terpolymer aus Isobutylen, p-Methylstyrol und Brom-p-Methylstyrol.

Die Kautschukmischung B ist bevorzugt frei von Ethylen-Propylen-Dien-Kautschuk, d. h. sie enthält 0 phr Ethylen-Propylen-Dien-Kautschuk.

Es handelt sich bei der Kautschukzusammensetzung der Base Mischung B somit nicht um eine Kautschukmischung, die üblicherweise in äußeren Bauteilen in heller oder gefärbter Form Verwendung findet, wodurch die Base weiterhin den Anforderungen hinsichtlich Wärmeaufbau und Haltbarkeit gerecht wird.

Die Kautschukmischung B enthält bevorzugt wenigstens ein Alterungsschutzmittel, welches ausgewählt ist aus der Gruppe bestehend aus N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD) und 2,2,4-Trimethyl-1,2-dihydrochinolin (TMQ). Dadurch, dass die Kautschukmischung B im Neureifen nicht nach außen in Erscheinung tritt, können die genannten Alterungsschutzmittel ohne Nachteile hinsichtlich einer etwaigen Verfärbung des Reifens verwendet werden.

Die Kautschukmischung B ist frei von Ruß, d. h. sie enthält 0 phr Ruß, und ist damit nicht schwarz. Sie enthält bevorzugt ein Füllstoffsystem mit mehr als 90 Gew.-% wenigstens einer Kieselsäure bezogen auf die Gesamtmenge an Füllstoffen. Das bedeutet, dass auch die Kautschukmischung B Kieselsäure als Hauptfüllstoff enthält.

Gemäß einer vorteilhaften Ausführungsform der Erfindung enthält die Mischung B wenigstens eine Kieselsäure mit einer CTAB-Oberfläche (gemäß ASTM D 3765) von 30 bis 300 m²/g, bevorzugt von 60 bis 255 m²/g.

Gemäß einer vorteilhaften Ausführungsform der Erfindung enthält die Mischung B mehr als 50 Gew.-% wenigstens einer Kieselsäure mit einer CTAB-Oberfläche (gemäß ASTM D 3765) von 110 bis 220 m²/g, bevorzugt von 130 bis 190 m²/g. Hier beziehen sich die Gew.-% auf die Gesamtmenge an enthaltenen Kieselsäuren.

Ferner kann die Kautschukmischung B weitere nicht schwarz färbende Füllstoffe enthalten, wie Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).

Besonders bevorzugt liegt die Kieselsäure in Form angebundener Kieselsäure in der Kautschukmischung B bzw. in dem Vulkanisat vor; hierzu enthält die Kautschukmischung B bevorzugt wenigstens ein Silan-Kupplungsagens, wobei sämtliche obigen Ausführungen für die Cap-Mischung A zu dem Silan-Kupplungsagens hier ebenfalls gelten.

Des Weiteren kann die Kautschukmischung B übliche Zusatzstoffe in üblichen Gewichtsteilen enthalten, die bei deren Herstellung bevorzugt in wenigstens einer Grundmischstufe zugegeben werden. Zu diesen Zusatzstoffen zählen die oben für die Kautschukmischung A genannten Substanzen.

Die Kautschukmischung B bzw. deren Vulkansiat basiert bevorzugt auf einer Schwefelvulkanisation. Hierzu enthält die unvulkanisierte Kautschukmischung B Schwefel und/oder Schwefelspender sowie von Vulkanisationsbeschleuniger, wobei einige Vulkanisationsbeschleuniger zugleich als Schwefelspender wirken können. Dabei gelten hier ebenfalls sämtliche obige Ausführungen für die Cap-Mischung A.

Die Herstellung des erfindungsgemäßen Fahrzeugreifens erfolgt nach dem Fachmann bekannten Verfahrensschritten, wobei insbesondere die Kautschukmischungen A und B wie beschrieben in einer oder mehreren Mischstufen separat als Grundmischungen und nach Zugabe des Vulkanisationssystems als Fertigmischungen bereitgestellt und in die Form einer Laufstreifencap (Kautschukmischung A) und einer Laufstreifenbase (Kautschukmischung B) gebracht werden.
Die Formgebung der einzelnen Reifenbauteile erfolgt beispielsweise durch Extrusion oder Kalandrieren.
Der aus unvulkanisierten Bauteilen zusammengesetzte Reifenrohling wird anschließend vulkanisiert.

Beispielhafte erfindungsgemäße Zusammensetzungen der Kautschukmischung A (A1 und A2) und der Kautschukmischung B (B1 und B2) sind in Tabelle 1 aufgeführt. Sämtliche Mengenangaben in Tabelle 1 sind in phr.

**Tabelle 1**

| **Bestandteile** | **A1** | **A2** | **B1** | **B2** |
|---|---|---|---|---|
| NR | 20 | 20 | 90 | 100 |
| BR high cis | - | 20 | 10 | - |
| SSBR | 80 | 60 | - | - |
| N339 | 10 | 5 | 0 | 0 |
| Kieselsäure VN3, Fa. Evonik | 90 | 115 | 50 | 60 |
| TESPD | 6,3 | 8,1 | 3,5 | 4,2 |
| TMQ, 6PPD, DTPD | 7 | 7 | 5 | 5 |
| Wachs | 2 | 2 | - | - |
| Kohlenwasserstoffharz | - | 20 | - | - |
| Öl | 35 | 30 | 5 | 10 |
| Prozesshilfsmittel | 5 | 6 | 3 | 2 |
| ZnO | 3 | 3 | 3 | 3 |
| Stearinsäure | 1 | 1 | 1 | 1 |
| Schwefel | 2 | 1,6 | 2 | 2,5 |
| DPG | 2 | 1,8 | 1 | 1,5 |
| TBBS | 1,8 | 1,8 | 2 | 2 |

## Patentansprüche

1. Fahrzeugreifen umfassend einen Laufstreifen, wobei der Laufstreifen eine Laufstreifencap und eine Laufstreifenbase umfasst, wobei die Laufstreifencap die Laufstreifenbase vollständig nach radial außen bedeckt, wobei die Laufstreifencap wenigstens eine erste Kautschukmischung A umfasst, welche ein Füllstoffsystem umfassend wenigstens einen Ruß und mehr als 80 Gew.-%, bevorzugt mehr als 90 Gew.-%, wenigstens einer Kieselsäure bezogen auf die Gesamtmenge an Füllstoffen enthält; und wobei die Laufstreifenbase wenigstens eine zweite Kautschukmischung B umfasst, welche frei von Ruß ist und welche nicht schwarz ist und welche mindestens 50 phr Naturkautschuk (NR) enthält, und wobei der Fahrzeugreifen wenigstens einen Carbon Center Beam aufweist.

2. Fahrzeugreifen nach Anspruch 1, **dadurch gekennzeichnet, dass** es sich um einen profilierten Fahrzeugreifen mit radial erhabenen Profilelementen, wie insbesondere Profilrippen und/oder Profilblockelementen handelt.

3. Fahrzeugreifen nach Anspruch 1, **dadurch gekennzeichnet, dass** es sich um einen Fahrzeugluftreifen handelt.

4. Fahrzeugreifen nach Anspruch 1, **dadurch gekennzeichnet, dass** es sich um einen Fahrzeugreifen für Personenkraftwagen handelt.

5. Fahrzeugreifen nach Anspruch 1, **dadurch gekennzeichnet, dass** die Kautschukmischung B wenigstens ein Alterungsschutzmittel enthält, welches ausgewählt ist aus der Gruppe bestehend aus N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD) und 2,2,4-Trimethyl-1,2-dihydrochinolin (TMQ).

6. Fahrzeugreifen nach Anspruch 1, **dadurch gekennzeichnet, dass** die Kautschukmischung B 85 phr oder mehr wenigstens eines natürlichen Polyisoprens enthält.

7. Fahrzeugreifen nach Anspruch 1, **dadurch gekennzeichnet, dass** die Kautschukmischung B ein Füllstoffsystem mit mehr als 90 Gew.-% wenigstens einer Kieselsäure bezogen auf die Gesamtmenge an Füllstoffen enthält.

8. Fahrzeugreifen nach Anspruch 1, **dadurch gekennzeichnet, dass** die Kautschukmischung B wenigstens eine Kieselsäure mit einer CTAB-Oberfläche (gemäß ASTM D 3765) von 30 bis 300 m²/g, bevorzugt von 60 bis 255 m²/g, enthält.

9. Fahrzeugreifen nach Anspruch 1, **dadurch gekennzeichnet, dass** die Kautschukmischung B mehr als 50 Gew.-% wenigstens einer Kieselsäure mit einer CTAB-Oberfläche (gemäß ASTM D 3765) von 110 bis 220 m²/g, bevorzugt von 130 bis 190 m²/g, enthält.

10. Fahrzeugreifen nach Anspruch 1, **dadurch gekennzeichnet, dass** die Kautschukmischung B frei von einem Terpolymer aus Isobutylen, *p*-Methylstyrol und Brom-*p*-Methylstyrol ist.

## Claims

1. Vehicle tyre comprising a tread, wherein the tread comprises a tread cap and a tread base, wherein the tread cap fully covers the tread base in the radially outward direction, wherein the tread cap comprises at least one first rubber mixture A which contains a filler system comprising at least one carbon black and more than 80% by weight, preferably more than 90% by weight, of at least one silica based on the total amount of fillers; and wherein the tread base comprises at least one second rubber mixture B which is free from carbon black and which is not black and which contains at least 50 phr of natural rubber (NR) and wherein the vehicle tyre comprises at least one carbon center beam.

2. Vehicle tyre according to Claim 1, **characterized in that** it is a profiled vehicle tyre having radially elevated profile elements, such as especially profile ribs and/or profile block elements.

3. Vehicle tyre according to Claim 1, **characterized in that** it is a pneumatic vehicle tyre.

4. Vehicle tyre according to Claim 1, **characterized in that** it is a vehicle tyre for passenger cars.

5. Vehicle tyre according to Claim 1, **characterized in that** the rubber mixture B contains at least one antiaging agent selected from the group consisting of N-phenyl-N'-(1,3-dimethylbutyl)-p-phenylenediamine (6PPD), N,N'-diphenyl-p-phenylenediamine (DPPD), N,N'-ditolyl-p-phenylenediamine (DTPD), N-isopropyl-N'-phenyl-p-phenylenediamine (IPPD) and 2,2,4-trimethyl-1,2-dihydroquinoline (TMQ).

6. Vehicle tyre according to Claim 1, **characterized in that** the rubber mixture B contains 85 phr or more of at least one natural polyisoprene.

7. Vehicle tyre according to Claim 1, **characterized in that** the rubber mixture B contains a filler system comprising more than 90% by weight of at least one silica based on the total amount of fillers.

8. Vehicle tyre according to Claim 1, **characterized in that** the rubber mixture B contains at least one silica having a CTAB surface area (according to ASTM D 3765) of 30 to 300 m²/g, preferably of 60 to 255 m²/g.

9. Vehicle tyre according to Claim 1, **characterized in that** the rubber mixture B contains more than 50% by weight of at least one silica having a CTAB surface area (according to ASTM D 3765) of 110 to 220 m²/g, preferably of 130 to 190 m²/g.

10. Vehicle tyre according to Claim 1, **characterized in that** the rubber mixture B is free from a terpolymer of isobutylene, p-methylstyrene and bromo-p-methylstyrene.

## Revendications

1. Pneu de véhicule comprenant une bande de roulement, la bande de roulement comprenant une coiffe de bande de roulement et une base de bande de roulement, la coiffe de bande roulement recouvrant entièrement radialement vers l'extérieur la base de bande de roulement, la coiffe de bande de roulement comprenant au moins un premier mélange de caoutchouc A, qui contient un système de charges comprenant au moins un noir de carbone et plus de 80 % en poids, de préférence plus de 90 % en poids, d'au moins une silice par rapport à la quantité totale de charges ; et la base de bande de roulement comprenant au moins un deuxième mélange de caoutchouc B, qui est exempt de noir de carbone et qui n'est pas noir et qui contient au moins 50 pce de caoutchouc naturel (NR), et le pneu de véhicule comprenant au moins un faisceau central de carbone.

2. Pneu de véhicule selon la revendication 1, **caractérisé en ce qu'**il s'agit d'un pneu de véhicule profilé comprenant des éléments profilés surélevés radialement, tels que notamment des nervures profilées et/ou des éléments blocs profilés.

3. Pneu de véhicule selon la revendication 1, **caractérisé en ce qu'**il s'agit d'un pneumatique de véhicule.

4. Pneu de véhicule selon la revendication 1, **caractérisé en ce qu'**il s'agit d'un pneu de véhicule pour automobiles.

5. Pneu de véhicule selon la revendication 1, **caractérisé en ce que** le mélange de caoutchouc B contient au moins un agent antivieillissement, qui est choisi dans le groupe constitué par la N-phényl-N'-(1,3-diméthylbutyl)-p-phénylène-diamine (6PPD), la N,N'-diphényl-p-phénylène-diamine (DPPD), la N,N'-ditolyl-p-phénylène-diamine (DTPD), la N-isopropyl-N'-phényl-p-phénylène-diamine (IPPD) et la 2,2,4-triméthyl-1,2-dihydroquinoline (TMQ).

6. Pneu de véhicule selon la revendication 1, **caractérisé en ce que** le mélange de caoutchouc B contient 85 pce ou plus d'au moins un polyisoprène naturel.

7. Pneu de véhicule selon la revendication 1, **caractérisé en ce que** le mélange de caoutchouc B contient un système de charges comprenant plus de 90 % en poids d'au moins une silice par rapport à la quantité totale de charges.

8. Pneu de véhicule selon la revendication 1, **caractérisé en ce que** le mélange de caoutchouc B contient au moins une silice ayant une surface CTAB (selon ASTM D 3765) de 30 à 300 m²/g, de préférence de 60 à 255 m²/g.

9. Pneu de véhicule selon la revendication 1, **caractérisé en ce que** le mélange de caoutchouc B contient plus de 50 % en poids d'au moins une silice ayant une surface CTAB (selon ASTM D 3765) de 110 à 220 m²/g, de préférence de 130 à 190 m²/g.

10. Pneu de véhicule selon la revendication 1, **caractérisé en ce que** le mélange de caoutchouc B est exempt d'un terpolymère d'isobutylène, de p-méthylstyrène et de bromo-p-méthylstyrène.
